# EUROPÄISCHE PATENTSCHRIFT

(11) **EP 3 380 807 B1**
(45) Veröffentlichungstag und Bekanntmachung des Hinweises auf die Patenterteilung: **19.08.2020**
(21) Anmeldenummer: 16798797.3
(22) Anmeldetag: 23.11.2016
(51) Int. Cl.: G01C 15/00, G12B 9/00, H04W 12/00, H04W 4/02, G01S 19/16, A45C 15/00, A45C 13/18, A45C 11/00, A45C 13/02, H04W 4/029, H04W 12/12, G06F 21/88

(54) **SCHUTZBEHÄLTER**
PROTECTIVE CASE FOR SURVEYING DEVICES
RÉCIPIENT DE SÉCURITÉ POUR APPAREILS DE MESURE

(30) Priorität: 24.11.2015 EP 15196101
(43) Veröffentlichungstag der Anmeldung: 03.10.2018
(60) Teilanmeldung: 20152756.1
(73) Patentinhaber: Leica Geosystems AG, 9435 Heerbrugg (CH)
(72) Erfinder: HARRING, Thomas, 6340 Baar (CH); BRODER, Katherine, 9491 Ruggell (LI); BÖCKEM, Burkhard, 8916 Jonen (CH)
(74) Vertreter: Kaminski Harmann
(86) Internationale Anmeldenummer: PCT/EP2016/078584
(87) Internationale Veröffentlichungsnummer: WO 2017/089416

(56) Entgegenhaltungen:
- EP-A1- 2 737 820
- EP-A1- 2 737 820
- EP-A1- 2 737 820
- DE-A1-102012 111 321
- DE-A1-102012 111 321
- DE-U1- 20 204 826
- DE-U1- 20 204 826
- DE-U1- 20 204 826
- GB-A- 2 180 220
- GB-A- 2 180 220
- GB-A- 2 180 220
- JP-A- 2005 312 779
- JP-A- 2005 312 779
- JP-A- 2005 320 695
- JP-A- 2005 320 695
- JP-A- 2005 320 695
- US-A1- 2008 116 093
- US-A1- 2008 116 093
- US-A1- 2008 116 093
- US-A1- 2010 100 972
- US-A1- 2010 100 972
- US-A1- 2010 252 626
- US-A1- 2010 252 626
- US-A1- 2011 173 023
- US-A1- 2011 173 023
- US-A1- 2011 199 212
- US-A1- 2011 199 212
- US-A1- 2012 262 116
- US-A1- 2012 262 116
- US-A1- 2012 279 875
- US-A1- 2012 279 875
- US-A1- 2013 109 375
- US-A1- 2013 109 375
- US-A1- 2013 109 375
- US-A1- 2015 091 705
- US-A1- 2015 091 705

## Beschreibung

Die vorliegende Erfindung betrifft einen tragbaren Schutzbehälter, insbesondere ausgestaltet als ein Koffer, zum sicheren Transport und Verwahren eines elektrischen Vermessungsgeräts gemäß Anspruch 1. "Insbesondere ist der erfindungsgemässe Schutzbehälter dazu ausgestaltet, ein im Inneren befindliches wertvolles und empfindliches Vermessungsgerät vor Diebstahl, unbefugtem Gebrauch und/oder potentiell schädlichen Umwelteinflüssen zu schützen. Dazu weist der Behälter erfindungsgemäss Kommunikationsmittel zum Senden und Empfangen von Daten über ein Funknetz auf, sowie zum Empfangen von Lokalisierungsdaten, die der Kommunikationseinheit ein zumindest grobes Lokalisieren des Behälters ermöglichen. Die Erfindung betrifft des weiteren ein System aus mehreren erfindungsgemässen Schutzbehältern, deren Kommunikationsmittel zum gegenseitigen Datenaustausch ausgestaltet sind. Ausserdem betrifft die Erfindung ein Verfahren zum Vorbereiten eines Vermessungsgerätes während eines Transports in einem Innenraum eines Behälters auf einen Einsatz, gemäß Anspruch 14.

Verfahren und Systeme zur Entfernungsmessung werden finden in verschiedenen Bereichen Anwendung. Beispiele hierfür sind ausgesprochen präzise Vermessungen in geodätischen Applikationen, aber auch Messaufgaben im Bereich der Bauinstallation oder für industrielle Prozesssteuerungen. Für diese Aufgaben werden stationäre, bewegbare oder auch handhaltbare Entfernungsmessgeräte eingesetzt, welche eine optische Entfernungsmessung zu einem ausgewählten Messpunkt ausführen. Als Vermessungsgerät werden im folgenden elektronische Instrumente verstanden, die im Rahmen der geodätischen, industriellen oder Bauvermessung Verwendung finden. Dies umfasst beispielsweise Geräte zur optischen Abstandsmessung oder zur Erfassung von dreidimensionalen Koordinaten entfernter Objekte wie Theodoliten, Tachymeter, Totalstationen, Lasertracker, Laserscanner oder handgehaltene Entfernungsmessgeräte, aber auch Hilfsmittel wie Rotations-, Kanalbau- oder Linienlaser oder GNSS-Empfangseinheiten.

Solche für professionelle Anwendungen gedachten, insbesondere hochpräzisen Geräte sind sowohl relativ teuer in der Anschaffung als auch empfindlich gegenüber schädlichen Umwelteinflüssen, wie z. B. Feuchtigkeit oder extremen Temperaturen, und gegenüber Erschütterungen und Stössen beim Transport. Es ist folglich wünschenswert, wertvolle Vermessungsgeräte effektiv vor unberechtigter Verwendung, Diebstahl und Beschädigung zu schützen.

Weiterhin ist es wünschenswert, dass diese Geräte möglichst effizient eingesetzt werden. Das heisst, dass insbesondere unnötige Wartezeiten am Einsatzort des Gerätes vermieden werden sollten - z. B. solche Zeiten in denen das Gerät vor dem Einsatz zunächst konfiguriert werden muss, in denen einsatzbezogene bzw. einsatzortbezogene Daten in das Gerät geladen werden, oder in denen das Gerät auf Betriebstemperatur gebracht wird.

Die US 2013/0109375 offenbart einen tragbaren Schutzbehälter zum Transport eines elektrischen Vermessungsgerätes, wobei der Schutzbehälter eine Kommunikationseinrichtung zum Austausch von Daten mit dem in seinem Innenraum befindlichen Vermessungsgerät aufweist.

Die US2010/0100972 A1 offenbart ein Verfahren zum Aktivieren eines Geräts in einem geographischen Bereich.

Es ist daher eine Aufgabe der vorliegenden Erfindung, einen verbesserten Schutzbehälter für Vermessungsgeräte bereitzustellen.

Insbesondere ist es eine Aufgabe der vorliegenden Erfindung, einen solchen Schutzbehälter und ein Verfahren bereitzustellen, die es ermöglichen, ein im Schutzbehälter befindliches elektrisches Vermessungsgerät auf einen Einsatz vorzubereiten.

Diese Aufgabe wird durch die Verwirklichung der kennzeichnenden Merkmale des unabhängigen Anspruchs 1, bzw. durch die Merkmale des unabhängigen Anspruchs 14 gelöst. Vorteilhafte Ausgestaltungen der Erfindung finden sich dabei in den jeweils abhängigen Ansprüchen. Ein erster Aspekt der vorliegenden Erfindung betrifft einen tragbaren Vermessungsgerätschutzbehälter (kurz: Schutzbehälter) zum Transport eines elektrischen Vermessungsgerätes. Dieser weist eine äussere Hülle mit innerer Verschalung auf, die einen Innenraum umschliesst, welcher zur Aufnahme des Vermessungsgerätes ausgestaltet ist, wobei der Innenraum mindestens eine Halterung aufweist und wobei die mindestens eine Halterung speziell zur Aufnahme eines bestimmten Vermessungsgeräte-Typs mit bekannten Ausmassen ausgestaltet ist. Ausserdem weist der Schutzbehälter einen Griff auf, der dazu ausgestaltet ist, ein Tragen des Schutzbehälters durch einen Benutzer zu ermöglichen, einen Schliessmechanismus, der dazu ausgestaltet ist, ein Öffnen des Schutzbehälters durch einen Benutzer zu ermöglichen, eine in den Schutzbehälter, insbesondere in die Hülle oder die Verschalung, integrierte Kommunikationseinheit, und eine mindestens einen Akkumulator aufweisende Versorgungseinheit zur Stromversorgung der Kommunikationseinheit. Erfindungsgemäss weist der Schutzbehälter Überprüfungsmittel zum Überprüfen eines Vorhandenseins und einer Identität eines Vermessungsgerätes im Innenraum auf. Die Kommunikationseinheit ist dazu ausgestaltet, Daten über Vorhandensein und Identität des Vermessungsgerätes abzurufen, Daten über ein externes Funknetz abzurufen und zu versenden, insbesondere über ein terrestrisches oder satellitengestütztes Mobilfunknetz oder ein lokales Netzwerk, und Lokalisierungsdaten zu empfangen, die eine zumindest grobe Position des Schutzbehälters bereitstellen.

Erfindungsgemäß ist der erfindungsgemässe Schutzbehälter zur Aufnahme eines bestimmten Vermessungsgerätes oder eines bestimmten Vermessungsgeräte-Typs mit bekannten Ausmassen ausgestaltet. Ein solches Vermessungsgerät kann insbesondere als eines der folgenden ausgestaltet sein:
- ein Theodolit,
- eine Totalstation,
- ein Lasertracker,
- ein Laserscanner,
- ein Rotationslaser,
- ein Digitalnivellier,
- ein handhaltbares Entfernungsmessgerät,
- ein Detektionsgerät,
- ein Linienlaser oder
- eine GNSS-Empfangseinheit.

Optional kann der Schutzbehälter Rollen oder Räder aufweisen, die dazu ausgestaltet sind, ein Bewegen des Behälters durch einen einzelnen Benutzer mittels Schieben oder Ziehen zu ermöglichen.

Insbesondere kann dabei der Innenraum mit einem Trägermaterial verfüllt sein, beispielsweise einem Schaumstoff oder einer mittels Blasformen hergestellter Kunststoffform, wobei die mindestens eine Halterung eine Aussparung in dem Trägermaterial mit einer dem Vermessungsgerät entsprechenden Form ist.

Zur Aufnahme von Bauteilen eines zerlegten Vermessungsgerätes kann der Innenraum optional mehrere entsprechend ausgestaltete Halterungen aufweisen. Ebenso kann der Innenraum zusätzlich mindestens eine zur Aufnahme eines Ersatz- oder Zubehörteiles des Vermessungsgerätes ausgestaltete Halterung aufweisen.

Gemäss einer weiteren Ausführungsform weisen die Überprüfungsmittel eine Kamera, einen Annäherungssensor, einen Barcodescanner oder ein RFID-Lesegerät auf, um ein Vorhandensein eines aufzunehmenden Vermessungsgerätes (bzw. die Vollständigkeit aller aufzunehmenden Teile) im Innenraum zu überprüfen und/oder die Identität des Vermessungsgerätes festzustellen.

Gemäss einer weiteren Ausführungsform weist der erfindungsgemässe Schutzbehälter Mittel zum Generieren eines kabellosen Datennetzwerkes im Innenraum auf, beispielsweise mittels Bluetooth oder eines WLAN-Signals.

Erfindungsgemäß ist die Kommunikationseinheit dazu ausgestaltet, z. B. über dieses kabellose Datennetzwerk, Daten mit dem Vermessungsgerät auszutauschen, insbesondere wobei die Kommunikationseinheit dazu ausgestaltet ist, über das Funknetz abgerufene Daten an das Vermessungsgerät weiterzuleiten und/oder von dem Vermessungsgerät empfangene Daten zu versenden.

Gemäss einer weiteren Ausführungsform weist der erfindungsgemässe Schutzbehälter auf seiner äusseren Hülle eine Anzeigeeinheit zum Anzeigen von Informationen über ein im Innenraum befindliches Vermessungsgerät auf, insbesondere in Form eines Touchscreens oder eines E-Papier-Displays, insbesondere wobei die Kommunikationseinheit dazu ausgestaltet ist, die Informationen über das im Innenraum befindliche Vermessungsgerät der Anzeigeeinheit bereitzustellen.

In einer Ausführungsform ist die Versorgungseinheit zusätzlich auch zur Stromversorgung des Vermessungsgerätes im Innenraum mittels eines Kabels, mittels elektrischer Kontakte oder mittels Induktion ausgestaltet ist.

Diese Versorgungseinheit weist erfindungsgemäß einen Akkumulator und vorzugsweise zusätzlich einen Strom-Generator eine Brennstoffzelle, Solarzellen, oder Mittel für eine externe Stromversorgung (z. B. einen Anschluss für ein Stromkabel, Induktionsspulen oder elektrische Kontakte) auf.

Auch kann der Behälter Mittel zum Anzeigen eines Ladezustands des Gerätes aufweisen, oder die Kommunikationseinheit zum Versenden von Informationen bezüglich des Ladezustands des Vermessungsgerätes, respektive der Versorgungseinheit ausgestaltet sein.

Optional kann die Versorgungseinheit darüber hinaus zur Vorbereitung des Geräts auf den nächsten Einsatz das Laden des internen Akkumulators des Vermessungsgerätes initiieren. Zum Laden herangezogen werden könnten beispielsweise der Akkumulator der Versorgungseinheit (als Not-Puffer), ein sich im Behälter befindlicher Ersatzakku des Vermessungsgerätes, der an die Behälterelektronik angeschlossen ist, oder eine externe Stromquelle, wie etwa ein Fahrzeugbordnetz.

Falls erkannt wird, dass der (Gesamt-)Ladezustand in an Betracht des geplanten Einsatzes kritisch ist, kann eine Warnung an den Benutzer ergehen. Nach dem Einsatz kann der Behälter den Ladezustand signalisieren und/oder den Anschluss an eine externe Stromquelle anfordern.

Gemäss einer anderen Ausführungsform ist die Kommunikationseinheit dazu ausgestaltet, eine Verbindung mit dem Internet herzustellen, und die Daten über das Internet abzurufen und zu versenden.

In einer Ausführungsform kann die Kommunikationseinheit zum Austausch von Daten eine Verbindung mit einer Kommunikationseinheit mindestens eines weiteren Schutzbehälters aufnehmen.

In einer Ausführungsform kann die Kommunikationseinheit zum Austausch von Daten eine Verbindung mit einem weiteren Vermessungsgerät aufnehmen, welches nicht über einen eigenen Schutzbehälter mit Kommunikationseinheit verfügt.

Gemäss einer anderen Ausführungsform ist die Kommunikationseinheit dazu ausgestaltet, eine Verbindung mit einem den Schutzbehälter aufnehmenden Transportmittel, insbesondere Fahrzeug, herzustellen. Beispielsweise kann auf Daten eines Navigationssystems des Fahrzeugs zugreifbar sein, oder ein lokales Netzwerk (z. B. WLAN oder Bluetooth) des Fahrzeugs zur Kommunikation über das Internet verwendet werden.

Gemäss einer weiteren Ausführungsform ist die Kommunikationseinheit dazu ausgestaltet, die Daten selbsttätig abzurufen und/oder selbsttätig zu versenden, insbesondere von einem bzw. an einen externen Servercomputer.

Gemäss einer weiteren Ausführungsform ist die Kommunikationseinheit dazu ausgestaltet, die Lokalisierungsdaten über das Funknetz abzurufen.

Gemäss einer weiteren Ausführungsform weist der Schutzbehälter eine GNSS-Empfangseinheit zur Positionsbestimmung des Behälters mittels eines globalen Navigationssatellitensystems auf, wobei die Kommunikationseinheit dazu ausgestaltet ist, die Lokalisierungsdaten von der GNSS-Empfangseinheit zu empfangen.

In einer Ausführungsform des erfindungsgemässen Behälters ist die Kommunikationseinheit dazu ausgestaltet, basierend auf den abgerufenen Daten eine zumindest grobe Position des Schutzbehälters zu ermitteln. Dabei ist die Position des Behälters insbesondere auf mindestens dreihundert Meter genau ermittelbar ist, vorzugsweise auf mindestens dreissig Meter genau. Optional kann die Kommunikationseinheit dazu ausgestaltet sein, basierend auf einer Vielzahl von abgeleiteten Positionen des Behälters ein Bewegungsprofil zu erstellen.

Gemäß der Erfindung ist die Kommunikationseinheit dazu ausgestaltet, basierend auf der ermittelten Position des Schutzbehälters und auf einem bekannten Einsatzort des Vermessungsgerätes eine Restzeit bis zu einer Ankunft des Behälters am Einsatzort zu ermitteln, d. h. insbesondere zu berechnen oder zu schätzen. Dabei sind durch die Kommunikationseinheit solche Daten abrufbar, aus denen der Einsatzort ermittelbar ist.

Die Kommunikationseinheit ist ausserdem dazu ausgestaltet, Daten mit dem Vermessungsgerät auszutauschen und basierend auf einer ermittelten Restzeit selbsttätig das Vermessungsgerät einzuschalten und/oder einsatzbezogene oder einsatzortbezogene Daten an das Vermessungsgerät zu übermitteln.

In einer weiteren Ausführungsform weist der erfindungsgemässe Schutzbehälter zur Regelung einer Temperatur des Innenraumes bzw. des Vermessungsgerätes eine Temperaturregelungseinheit auf mit einer Temperaturerfassungseinheit und einer Heiz- und/oder Kühlfunktion. Die Kommunikationseinheit ist in dieser Ausführungsform dazu ausgestaltet, basierend auf einer ermittelten Restzeit einen Befehl an die Temperaturregelungseinheit zu geben, die Temperatur des Innenraumes bzw. des Vermessungsgerätes einer optimalen Betriebstemperatur des Vermessungsgerätes anzunähern oder anzugleichen.

Optional weist der Schutzbehälter eine Trocknungsfunktionalität auf, um ein nass eingelegtes Vermessungsgerät zu trocknen.

Gemäss einer weiteren Ausführungsform ist die Kommunikationseinheit des Behälters dazu ausgestaltet, basierend auf einer ermittelten Position des Behälters einen Befehl an den Schliessmechanismus des Behälters zu senden. Der Schliessmechanismus ist gemäss dieser Ausführungsform dazu ausgestaltet, in Abhängigkeit von dem von der Kommunikationseinheit erhaltenen Befehl, ein bestimmungsgemässes Öffnen des Behälters durch einen Benutzer zu verhindern oder zu ermöglichen, und/oder den Behälter selbsttätig zu öffnen. Wird ein Öffnen verhindert, kann beispielsweise eine Codeeingabe durch den Benutzer erforderlich sein, um den Behälter zu öffnen, oder ein Transport an einen anderen Ort.

In einer Ausführungsform ist die Kommunikationseinheit des Behälters dazu ausgestaltet, einen Befehl an ein im Innenraum befindliches Vermessungsgerät zu senden, einen Sperrmodus zu aktivieren (bzw. einen voreingestellten Sperrmodus zu deaktivieren), in welchem wesentliche Funktionen des Vermessungsgerätes nicht zur Verfügung stehen, insbesondere bis zu einer Freischaltung des Vermessungsgerätes mittels eines Entsperrcodes.

Gemäss einer weiteren Ausführungsform des erfindungsgemässen Schutzbehälters sind durch die Kommunikationseinheit solche Daten abrufbar, aus denen ein Vorliegen oder Nichtvorliegen einer Nutzungsberechtigung des Vermessungsgerätes ermittelbar ist, und die Kommunikationseinheit ist dazu ausgestaltet, basierend auf den Daten das Vorliegen oder Nichtvorliegen einer Nutzungsberechtigung des Vermessungsgerätes zu ermitteln. Die Daten sind dabei insbesondere über das Internet von einem externen Server abrufbar.

Der Schutzbehälter kann optional Mittel aufweisen, die dazu ausgestaltet sind, einen Öffnungsversuch des Schliessmechanismus zu erkennen und an die Kommunikationseinheit zu melden.

In einer weiteren Ausführungsform weist der Schutzbehälter eine automatisch ablaufende Diebstahlschutzfunktionalität auf, im Rahmen derer die Kommunikationseinheit - insbesondere wenn ein Nichtvorliegen einer Nutzungsberechtigung des Vermessungsgerätes ermittelt wurde - dazu ausgestaltet ist,
- eine Position des Behälters an einen externen Server zu übermitteln;
- einen Befehl an ein im Innenraum befindliches Vermessungsgerät zu senden, einen Sperrmodus zu aktivieren (bzw. einen voreingestellten Sperrmodus zu deaktivieren), in welchem zumindest wesentliche Funktionen des Vermessungsgerätes nicht zur Verfügung stehen, insbesondere bis zu einer Freischaltung des Vermessungsgerätes mittels eines Entsperrcodes;
- einen Befehl an den Schliessmechanismus zu senden, und der Schliessmechanismus dazu ausgestaltet ist, in Abhängigkeit von dem von der Kommunikationseinheit erhaltenen Befehl ein bestimmungsgemässes Öffnen des Behälters durch einen Benutzer zu verhindern;
- einen Befehl an eine Alarmeinheit des Behälters zu senden, und die Alarmeinheit dazu ausgestaltet ist, in Abhängigkeit von dem von der Kommunikationseinheit erhaltenen Befehl ein optisches und/oder akustisches Warnsignal auszugeben;
- einen Befehl an eine Selbstzerstörungseinheit des Behälters zu senden, und die Selbstzerstörungseinheit dazu ausgestaltet ist, in Abhängigkeit von dem von der Kommunikationseinheit erhaltenen Befehl ein im Innenraum befindliches Vermessungsgerät bzw. wesentliche Teile desselben dauerhaft unbrauchbar zu machen oder zu zerstören, und/oder
- einen Befehl an eine Markierungseinheit des Behälters zu senden, und die Markierungseinheit dazu ausgestaltet ist, in Abhängigkeit von dem von der Kommunikationseinheit erhaltenen Befehl ein im Innenraum befindliches Vermessungsgerät optisch (z. B. als gestohlen) zu markieren.

Der Schutzbehälter kann Mittel aufweisen, die dazu ausgestaltet sind, ein nicht-bestimmungsgemässes, insbesondere gewaltsames, Öffnen des Behälters (z. B. ein Aufbrechen des Schliessmechanismus oder der äusseren Hülle) zu erkennen.

Alternativ kann bei Vorliegen einer Nutzungsberechtigung, basierend auf zeit-, orts-, einsatz-, oder personenbezogenen Informationen auch ein Befehl an ein im Innenraum befindliches Vermessungsgerät gesendet werden (z. B. von einem Server empfangene Lizenzcodes), um eine oder mehrere Funktionen freizuschalten. Ansonsten bleibt das Vermessungsgerät gesperrt oder nur eingeschränkt funktionstüchtig.

In einer weiteren Ausführungsform ist der Schutzbehälter mit zusätzlichen Sensoren zur Erfassung und Aufzeichnung von Umwelteinflüssen, wie z. B. Feuchtigkeit, Temperatur, Erschütterungen und Stössen ausgestattet, welche die Kommunikationseinheit regelmässig oder nach Abruf bereitstellt oder an einen zentralen Server übermittelt. Dies kann insbesondere dazu dienen, unsachgemässe Transport- und Lagerbedingungen festzustellen, vor möglichen Beeinträchtigungen des Funktionszustandes (Kalibrierung) zu warnen, oder die gewonnen Informationen bei der Beurteilung von Garantiefällen heranzuziehen.

Ein zweiter Aspekt der vorliegenden Erfindung betrifft ein System von mindestens zwei erfindungsgemässen Schutzbehältern. In den Schutzbehältern des erfindungsgemässen Systems ist die Kommunikationseinheit jeweils dazu ausgestaltet, eine Verbindung mit Kommunikationseinheiten anderer Schutzbehälter herzustellen und Daten auszutauschen, die mindestens Informationen über im Innenraum der Schutzbehälter befindliche Vermessungsgeräte beinhalten. Dabei beinhalten die Daten beispielsweise mindestens Informationen über ein Vorhandensein bzw. eine Vollständigkeit sowie eine Identität der Vermessungsgeräte. Die Daten sind insbesondere mittels einer WPAN- oder WLAN-Verbindung austauschbar. Vorzugsweise kann mindestens eine erste Kommunikationseinheit dazu ausgestaltet sein, über das Funknetz abgerufene Daten an andere Kommunikationseinheiten weiterzuleiten, und von anderen Kommunikationseinheiten erhaltene Daten über das Funknetz zu versenden.

Ein dritter Aspekt der vorliegenden Erfindung betrifft ein Verfahren zum Vorbereiten eines Vermessungsgerätes während eines Transports des Vermessungsgerätes in einem Innenraum eines Behälters auf einen Einsatz an einem bekannten Einsatzort. Der Behälter ist dabei insbesondere ein Vermessungsgerätschutzbehälter gemäss dem ersten Aspekt der Erfindung. Das Verfahren umfasst
- ein Abrufen von Lokalisierungsdaten, die eine zumindest grobe Lokalisierbarkeit bereitstellen, durch eine Kommunikationseinheit des Schutzbehälters,
- ein Ermitteln, basierend auf den Lokalisierungsdaten, einer zumindest groben Position des Vermessungsgerätes durch die Kommunikationseinheit, und
- ein Ermitteln, basierend auf der ermittelten Position und dem bekannten Einsatzort, einer Restzeit bis zu einer Ankunft am Einsatzort durch die Kommunikationseinheit,
wobei basierend auf der ermittelten Restzeit das Vermessungsgerät automatisch eingeschaltet wird, und/
oder durch die Kommunikationseinheit einsatzortbezogene Daten an das Vermessungsgerät übermittelt werden.

Zusätzlich kann, basierend auf der ermittelten Restzeit, ein Akku des Vermessungsgerätes geladen werden, oder, basierend auf der ermittelten Restzeit, eine Temperatur des Innenraumes bzw. des Vermessungsgerätes einer optimalen Betriebstemperatur des Vermessungsgerätes angenähert oder angeglichen werden.

Nicht unter die beanspruchte Erfindung fällt ein Verfahren zum Verhindern einer unberechtigten Verwendung eines in einem Behälter, insbesondere einem tragbaren Vermessungsgerätschutzbehälter gemäss dem ersten Aspekt der Erfindung, befindlichen Vermessungsgerätes. Das Verfahren umfasst ein Abrufen von Daten über ein Funknetz und ein Ermitteln, basierend auf den Daten, ob eine orts-, zeit- oder personenbezogene Nutzungsberechtigung für das Vermessungsgerät vorliegt. Wenn diese Nutzungsberechtigung nicht vorliegt, wird ein bestimmungsgemässes Öffnens des Behälters verhindert, und/oder wesentliche Funktionen des Vermessungsgerätes werden deaktiviert, wobei diese beispielsweise bis zu einer Freischaltung mittels eines Entsperrcodes nicht zur Verfügung stehen.

In einer Ausführungsform weist dieses Verfahren eine automatisch ablaufende Diebstahlschutzfunktionalität auf, im Rahmen derer
- basierend auf den Daten eine Position ermittelt wird und die Position an einen externen Server übermittelt wird;
- ein optisches und/oder akustisches Warnsignal ausgegeben wird;
- das Vermessungsgerät optisch markiert wird; und/oder
- das Vermessungsgerät unbrauchbar gemacht wird, insbesondere dadurch, dass wesentliche Funktionen des Vermessungsgerätes deaktiviert werden, wobei diese insbesondere bis zu einer Freischaltung mittels eines Entsperrcodes nicht zur Verfügung stehen, oder dauerhaft zerstört werden.

Optional kann dabei ein nicht-bestimmungsgemässes, insbesondere gewaltsames, Öffnen des Behälters erkennbar sein, wobei die Diebstahlschutzfunktionalität bei Erkennen eines nicht-bestimmungsgemässen Öffnens des Behälters automatisch ausgelöst wird.

Ein weiterer Aspekt der vorliegenden Erfindung betrifft einen tragbaren Schutzbehälter gemäß dem ersten Aspekt der Erfindung, welcher Mittel zum Generieren eines kabellosen Datennetzwerkes im Innenraum und eine Anzeigeeinheit zum Anzeigen von Informationen über ein im Innenraum befindliches Gerät auf der äusseren Hülle aufweist, wobei die Kommunikationseinheit dazu ausgestaltet ist, über das kabellose Datennetzwerk Daten mit dem im Innenraum befindlichen Gerät auszutauschen und die Informationen über das Gerät der Anzeigeeinheit bereitzustellen.

Das Gerät ist als ein elektrisches Vermessungsgerät ausgestaltet, z. B. als
- ein Theodolit,
- ein Tachymeter,
- eine Totalstation,
- ein Lasertracker,
- ein Laserscanner oder
- ein handgehaltenes Entfernungsmessgerät.

Bei dem transportierten Gerät kann es sich insbesondere auch um ein sonstiges im Rahmen der geodätischen, industriellen oder Bauvermessung Verwendung findendes Gerät handeln, insbesondere einen Rotationslaser, Kanalbaulaser oder Linienlaser.

In einer Ausführungsform des Schutzbehälters wird das kabellose Datennetzwerk mittels Bluetooth oder mittels eines WLAN-Signals generiert.

Gemäss einer weiteren Ausführungsform weist der Schutzbehälter eine Mensch-Maschine-Schnittstelle auf seiner äusseren Hülle auf, insbesondere wobei die Anzeigeeinheit und die Schnittstelle als ein Touchscreen ausgestaltet sind.

Gemäss einer weiteren Ausführungsform ist die Anzeigeeinheit in Form eines E-Papier-Displays ausgestaltet.

Eine weitere Ausführungsform des Schutzbehälters ist dadurch gekennzeichnet, dass die Informationen über das im Innenraum befindliche Gerät mindestens folgendes umfassen:
- einen Ladezustand einer Batterie des Gerätes,
- eine Konfiguration des Gerätes, oder
- Informationen über einen Mietvertrag des Gerätes, insbesondere über einen Mieter, Besitzer und/oder Rückgabetermin.

In einer Ausführungsform des Schutzbehälters weisen die Überprüfungsmittel mindestens eine Kamera, einen Annäherungssensor, einen Barcodescanner oder ein RFID-Lesegerät auf.

Gemäss einer weiteren Ausführungsform sind die Überprüfungsmittel dazu ausgestaltet, das Vorhandensein bzw. die Identität des Gerätes mittels des kabellosen Datennetzwerkes zu überprüfen.

Gemäss einer weiteren Ausführungsform ist die Kommunikationseinheit dazu ausgestaltet,
- Daten über ein Funknetz abzurufen und zu versenden, insbesondere über ein terrestrisches oder satellitengestütztes Mobilfunknetz oder ein lokales Netzwerk, und
- über das Funknetz abgerufene Daten an das Gerät weiterzuleiten und/oder von dem Gerät empfangene Daten zu versenden.

Gemäss einer weiteren Ausführungsform ist die Kommunikationseinheit dazu ausgestaltet,
- eine Verbindung mit mindestens einem Gerät aufzunehmen, welches sich nicht im Innenraum des Schutzbehälters befindet;
- eine Verbindung mit einer Kommunikationseinheit mindestens eines weiteren Schutzbehälters aufzunehmen; und/oder
- eine Verbindung mit einem den Schutzbehälter aufnehmenden Transportmittel, insbesondere Fahrzeug, herzustellen.

Erfindungsgemäß ist die Kommunikationseinheit dazu ausgestaltet, Lokalisierungsdaten zu empfangen, die eine zumindest grobe Position des Schutzbehälters bereitstellen. Insbesondere ist die Kommunikationseinheit dabei dazu ausgestaltet, die Lokalisierungsdaten über das Funknetz abzurufen oder mittels GNSS zu empfangen, und/oder basierend auf einer Vielzahl von abgeleiteten Positionen des Schutzbehälters ein Bewegungsprofil zu erstellen. Insbesondere ist die Position des Schutzbehälters auf mindestens dreihundert Meter genau ermittelbar, vorzugsweise auf mindestens dreissig Meter genau.

Gemäss einer weiteren Ausführungsform ist die Versorgungseinheit zusätzlich zur Stromversorgung des Gerätes im Innenraum mittels eines Kabels, mittels elektrischer Kontakte oder mittels Induktion ausgestaltet.

Erfindungsgemäß weist die Versorgungseinheit mindestens einen Akkumulator und vorzugsweise zusätzlich einen Strom-Generator, eine Brennstoffzelle, Solarzellen oder Mittel für eine externe Stromversorgung, insbesondere einen Anschluss für ein Stromkabel, Induktionsspulen oder elektrische Kontakte, auf.

Erfindungsgemäß weist der Schutzbehälter einen Griff, der dazu ausgestaltet ist, ein Tragen des Schutzbehälters durch einen Benutzer zu ermöglichen, und/oder einen Schliessmechanismus, der dazu ausgestaltet ist, ein bestimmungsgemässes Öffnen des Schutzbehälters durch einen Benutzer zu ermöglichen, auf.

Gemäss einer weiteren Ausführungsform des Schutzbehälters ist der Innenraum mit einem Trägermaterial, insbesondere einem Schaumstoff oder einer mittels Blasformen hergestellter Kunststoffform, verfüllt, und die mindestens eine Halterung ist eine Aussparung in dem Trägermaterial mit einer dem Gerät entsprechenden Form.

Gemäss einer weiteren Ausführungsform des Schutzbehälters ist die mindestens eine Halterung zur Aufnahme von Bauteilen eines zerlegten Gerätes und/oder eines Ersatzteiles oder Zubehörteiles des Gerätes ausgestaltet.

Der erfindungsgemässe Vermessungsschutzbehälter und die Schutzverfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine Totalstation als Beispiel für ein in einem erfindungsgemässen Schutzbehälter transportierbares Vermessungsgerät;
- Fig. 2a-b: eine beispielhafte Ausführungsform eines erfindungsgemässen Schutzbehälters im geöffneten Zustand zur Aufnahme der Totalstation aus Fig. 1;
- Fig. 3: ein Kommunizieren einer Kommunikationseinheit des Schutzbehälters mit einem externen Server über das Internet;
- Fig. 4: ein Kommunizieren der Kommunikationseinheit mit anderen Komponenten des Schutzbehälters und mit dem transportierten Vermessungsgerät;
- Fig. 5: ein Flussdiagramm zur Illustration eines Verfahrens zum selbsttätigen Vorbereiten eines transportierten Vermessungsgerätes auf einen Einsatz durch den Schutzbehälter;
- Fig. 6: ein Flussdiagramm zur Illustration eines Verfahrens zum ortsabhängigen Verhindern der Entnahme des transportierten Vermessungsgerätes; und
- Fig. 7: ein Flussdiagramm zur Illustration eines Verfahrens zum Schutz des transportierten Vermessungsgerätes vor Diebstahl.

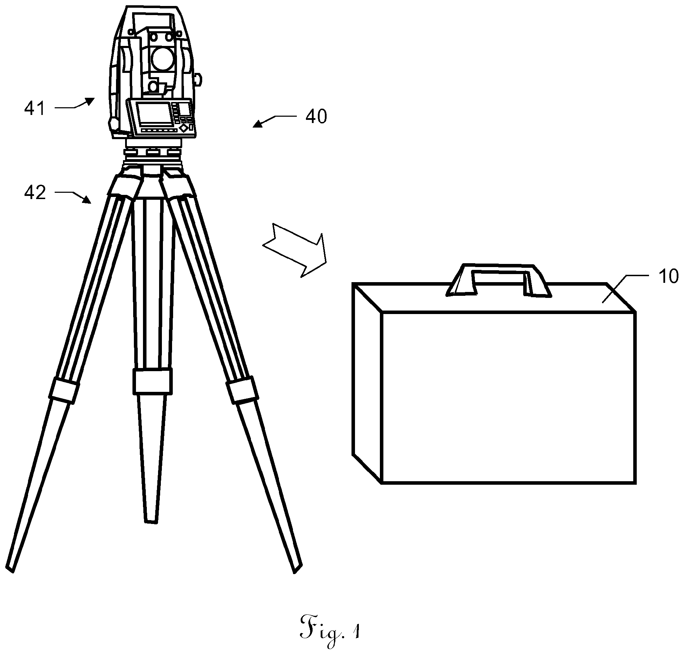

Figur 1 zeigt einen als Koffer 10 als erfindungsgemässen Schutzbehälter zum Transport eines Vermessungsgerätes. Als zu transportierendes Vermessungsgerät ist hier rein beispielhaft eine Totalstation 40 dargestellt. Diese ist in einen Oberteil 41 und eine Stativeinheit 42 zerlegbar.

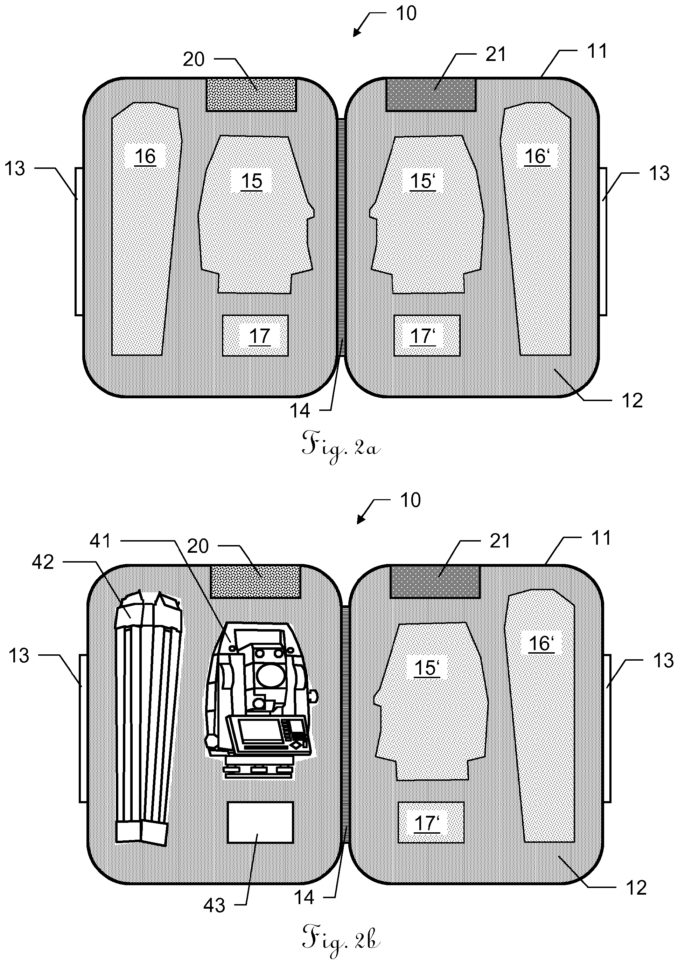

In den Figuren 2a und 2b ist eine beispielhafte Ausführungsform des als Koffer 10 ausgestalteten Schutzbehälters dargestellt. Dabei zeigt Figur 2a einen aufgeklappten leeren Koffer 10, und Figur 2b denselben Koffer mit eingesetzten Komponenten und Zubehörteilen einer Totalstation 41-43.

Der erfindungsgemässe Schutzbehälter 10 weist einen Schliessmechanismus 13 auf, mittels welchem der Schutzbehälter verschlossen werden kann. Beispielsweise kann der Schliessmechanismus 13 mittels Schlüssel zu öffnen und schliessen sein oder ein mechanisches oder elektronisches Zahlenschloss oder auch einen Fingerabdruckscanner aufweisen. Es sind aber generell auch andere Arten von Schliessmechanismus denkbar. Erfindungsgemäss weist der Behälter 10 ausserdem eine Kommunikationseinheit 20 auf, die zum Aufbau einer Kommunikationsverbindung über ein Funknetz ausgestaltet ist. Dazu weist die Kommunikationseinheit 20 beispielsweise eine SIM-Karte und eine Mobilfunkantenne auf. Alternativ oder zusätzlich kann eine Verbindung über ein lokales Netzwerk wie z. B. WLAN aufgebaut werden. Optional kann die Kommunikationseinheit 20 zusätzlich eine GNSS-Empfangseinheit zur Positionsbestimmung des Behälters mittels eines globalen Navigationssatellitensystems (z. B. GPS) aufweisen.

Wie in Figur 2a rein beispielhaft dargestellt, kann der Schutzbehälter 10 als ein Koffer ausgestaltet sein, dessen zwei Hälften mittels eines Scharniers 14 auseinandergeklappt werden können, um den Koffer so zu öffnen. Der Koffer weist eine Hülle 11 auf, die vorzugsweise stabil und wasserfest ausgestaltet ist und die einen Innenraum 12 des Koffers vollständig umschliesst. In dem Innenraum 12 sind Halterungen vorgesehen, um das Vermessungsgerät, bzw. dessen Komponenten und Zubehör- bzw. Ersatzteile aufzunehmen und vorzugsweise zu fixieren. In dem hier gezeigten Beispiel sind diese Halterungen als Aussparungen 15-17, 15'-17' in einem mit einem weichen aber formstabilen Schaumstoff ausgeführt, der im wesentlichen den gesamten Innenraum 12 ausfüllt. Alternativ kann der Innenraum auch durch Blasformen (z. B. Extrusions- oder Streckblasformen) in eine entsprechende Form gebracht werden.

Die Aussparungen 15-17, 15'-17' befinden sich in beiden Kofferhälften und sind den zu transportierenden Komponenten und Teilen des Vermessungsgerätes entsprechend geformt. Des weiteren weist der Koffer eine Batterie bzw. einen Akkumulator 21 zur Stromversorgung der Kommunikationseinheit 20 auf. Die Kommunikationseinheit 20 ist so im Innenraum 12 angebracht und die Hülle 11 ist so ausgestaltet, dass eine Kommunikation der Kommunikationseinheit 20 über ein externes Funknetz ermöglicht wird. Insbesondere kann dazu eine Antenne der Kommunikationseinheit 20 in die Hülle 11 integriert sein.

In Figur 2b sind ein Oberteil 41 und eine Stativeinheit 42 der Totalstation 40 aus Figur 1 in zwei der Aussparungen 15, 16 der ersten Kofferhälfte eingefügt. Die dritte Aussparung 17 hat als Zubehörteil der Totalstation einen Akku 43 aufgenommen. Die Aussparungen 15'-17' der zweiten Kofferhälfte nehmen bei einem Schliessen des Koffers 10 die überstehenden Teile der Totalstation-Komponenten 41-43 auf.

Um die Laufzeit des Akkus 43 zu verlängern, können vorzugsweise verschiedene Mittel zum Energy Harvesting vorhanden sein. Ebenso kann die Kommunikationseinheit energiesparende Betriebsarten aufweisen, z. B. einen periodischen Betrieb mit regelmässigen Inaktivitätsphasen (Schlafzyklen).

Vorzugsweise kann der Behälter einen Anschluss für eine externe Stromversorgung aufweisen (hier nicht dargestellt). Dies kann zum einen ein einfacher Anschluss für ein Stromkabel sein, zum anderen auch speziell konzipierte Kontakte oder Induktionsspulen, die ebenso speziell ausgestaltete Gegenstücke haben, die ein Aufladen für einen Benutzer besonders einfach machen. Diese Gegenstücke können zum Beispiel in einem Fahrzeug verbaut sein, das die Behälter transportiert oder Teil der Regale sein, in denen die Behälter gelagert werden, wenn sie nicht gebraucht werden, so dass die Geräte stets einsatzbereit sind, ohne sie aus dem Behälter entfernen zu müssen.

Der Akku 43 kann vorzugsweise auch zur Stromversorgung des transportierten Vermessungsgerätes 40 verwendet werden. Insbesondere kann während eines Transports der Akku des Gerätes geladen werden. Der Behälter kann dazu im Innenraum entsprechende Mittel zur Stromversorgung des Vermessungsgerätes 40 aufweisen. Diese können ein passendes Kabel beinhalten, dass vom Benutzer in das Vermessungsgerät 40 einzustecken ist, oder in den entsprechenden Aussparungen befindliche elektrische Kontakte, die beim Einlegen des Gerätes 40 automatisch mit entsprechenden Kontakten des Gerätes in Berührung kommen, sodass ein Strom fliessen kann. Ebenso kann eine Induktionsspule vorhanden sein, mittels welcher elektrische Energie in ein in den Behälter eingelegtes Vermessungsgerät übertragbar ist.

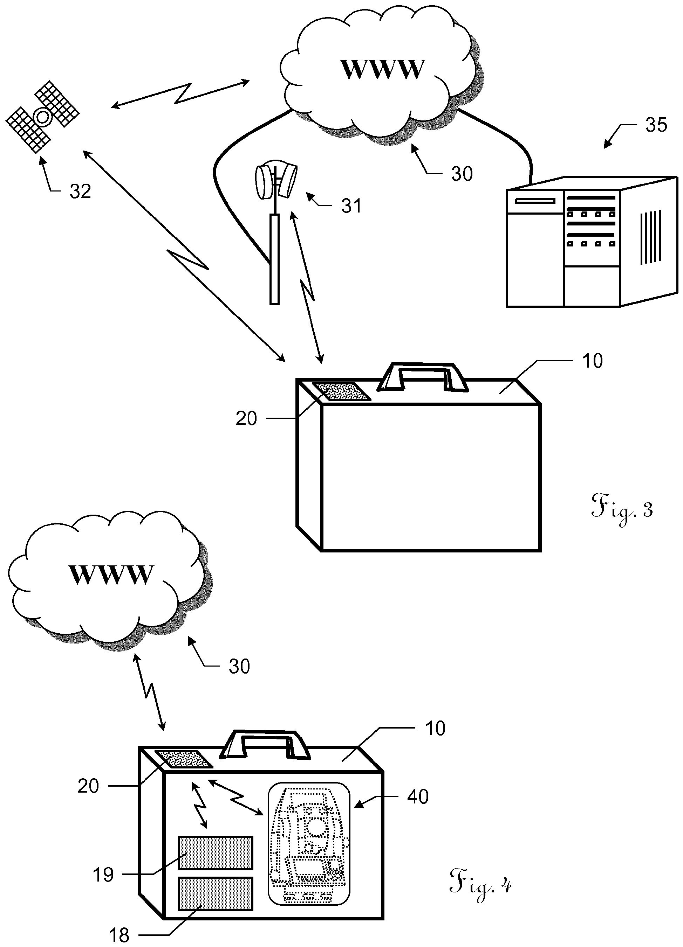

Figur 3 illustriert beispielhaft eine Kommunikation der Kommunikationseinheit 20 des Schutzbehälters 10 über das externe Funknetz. Dieses ist im dargestellten Beispiel ein Mobilfunknetz, und die Kommunikationseinheit 20 weist eine SIM-Karte auf, um über das Mobilfunknetz Daten austauschen zu können. Über Mobilfunkmasten 31 kann eine Verbindung mit einem terrestrischen Mobilfunknetz hergestellt werden, über Satelliten 32 mit einem satellitengestützten. Insbesondere können dann über das Internet 30 Daten mit einem externen Servercomputer 35 ausgetauscht werden. Durch die Verbindung mit dem Mobilfunknetz ist eine grobe Echtzeit-Lokalisierung des Behälters möglich, beispielsweise über GSM-Ortung.

Figur 4 illustriert beispielhaft eine interne Kommunikation der Kommunikationseinheit 20 des Schutzbehälters 10. Zusätzlich zur in Figur 3 illustrierten externen Kommunikationsfähigkeit kann die Kommunikationseinheit 20 vorzugsweise auch über eine interne Kommunikationsfähigkeit verfügen. So kann die Kommunikationseinheit 20 einerseits mit anderen Einheiten des Schutzbehälters 10 kommunizieren und andererseits über ein internes Funknetz - beispielsweise über WLAN oder Bluetooth - mit einem im Innenraum des Behälters transportierten Vermessungsgerät 40.

Als andere Einheiten des Schutzbehälters 10 sind hier rein beispielhaft eine Temperaturregelungseinheit 18 und eine Alarmeinheit 19 gezeigt.

Die Temperaturregelungseinheit 18 weist einerseits einen Temperaturfühler auf, der dazu ausgestaltet ist, eine Temperatur des Innenraums 12 zu erfassen; vorzugsweise kann er so angebracht sein, dass er eine Temperatur des Vermessungsgerätes 40 erfassen kann. Optional kann ein zweiter Temperaturfühler eine Aussentemperatur erfassen. Andererseits weist die Temperaturregelungseinheit 18 eine Heiz- und/oder Kühlfunktion auf, um die Temperatur des Innenraumes 12 bzw. des Vermessungsgerätes 40 zu erhöhen oder abzusenken. Beispielsweise kann die Temperatur während des gesamten Transports in einem bestimmten Bereich gehalten werden, um eine Beschädigung des Vermessungsgerätes 40 zu verhindern, oder das Vermessungsgerät 40 kann bereits vor Einsatzbeginn auf eine optimale Betriebstemperatur gebracht werden, um Verschleiss bzw. Wartezeiten zu reduzieren.

Alternativ oder zusätzlich zu dieser Temperaturregelungseinheit 18 kann auch eine Trocknungseinheit vorgesehen sein, die ein nach einem Einsatz nass im Behälter verpacktes Vermessungsgerät (z. B. nach einem Einsatz bei Regenwetter) trocknen kann. Dazu kann die Trocknungseinheit beispielsweise als Teil der Temperaturregelungseinheit 18 ausgeführt sein und mittels Heizfunktion und Ventilation die Feuchtigkeit aus dem Behälterinnenraum an die Umgebung abführen. Alternativ kommen auch andere Trocknungsmöglichkeiten in Frage wie Kondensationstrocknung oder Granulattrocknung.

Die Alarmeinheit 19 kann beispielsweise Leuchtmittel oder Lautsprecher aufweisen, um bei Bedarf optische oder akustische Warnsignale auszugeben.

Die Kommunikationseinheit 20 kann über die externe Funkverbindung beispielsweise über das Internet 30 Daten empfangen und diese an das Vermessungsgerät 40 über das interne Netzwerk weiterleiten. So kann die Kommunikationseinheit 20 beispielsweise einsatzbezogene oder einsatzortbezogene Daten abrufen und dem Gerät vor einem Einsatz zur Verfügung stellen, so dass diese direkt nach der Entnahme des Vermessungsgerätes 40 aus dem Behälter 10 am Einsatzort zur Verfügung stehen. Andersherum können auch Daten des Vermessungsgerätes 40 (z. B. bei einem vorherigen Einsatz erfasste Entfernungen oder 3D-Koordinaten) über das interne Funknetz an die Kommunikationseinheit 20 übermittelt werden und von dieser über das Internet 30 an einen externen Server weitergeleitet werden.

Die Kommunikationseinheit 20 ist erfindungsgemäss in der Lage, solche Daten über das Funknetz abzurufen, mittels welchen zumindest eine grobe Lokalisierung des Behälters 10 möglich ist.

Dadurch ist es beispielsweise möglich, zu ermitteln, ob sich der Behälter 10 einem zuvor definierten Einsatzort des Vermessungsgerätes 40 nähert, und es kann ein voraussichtlicher Zeitpunkt des Eintreffens am Einsatzort geschätzt bzw. berechnet werden. Darauf basierend kann die Kommunikationseinheit 20 beispielsweise einen Befehl an die Temperaturregelungseinheit 18 geben, das Vermessungsgerät 40 auf eine optimale Betriebstemperatur vorzuwärmen, oder das Gerät einschalten oder einsatz- oder einsatzortbezogene Daten an das Gerät übermitteln.

Ausserdem kann die Kommunikationseinheit 20 von dem Vermessungsgerät 40 selbst oder über das Internet 30 von einem externen Server Lizenzdaten des Gerätes abrufen, aus denen hervorgeht, in welchen Ländern oder Regionen das transportierte Gerät verwendet werden darf ("Geofencing"). Basierend auf den abgerufenen Lokalisierungsdaten kann die Kommunikationseinheit 20 erkennen, ob das Vermessungsgerät 40 am aktuellen Ort verwendet werden darf. Wenn dies nicht der Fall ist, kann die Kommunikationseinheit 20 z. B. einen Befehl an die Schliesseinheit ausgeben, ein Öffnen durch einen Benutzer zu verhindern, und einen Befehl an die Alarmeinheit 19, bei einem Öffnungsversuch einen Alarm auszulösen bzw. den Benutzer über die Gründe der Nicht-öffenbarkeit des Behälters 10 zu informieren.

Alternativ kann die Kommunikationseinheit 20 beispielsweise einen Befehl an das Vermessungsgerät 40 senden, nicht zu funktionieren, bis ein Freischalte-Code eingegeben wird. Ebenso kann der Freischalte-Code am Behälter einzugeben sein, um diesen öffnen zu können. Alternativ kann automatisch eine Information über die Entnahme des Gerätes 40 durch die Kommunikationseinheit 20 an den externen Server gesendet werden, der dann automatisch eine Gebühr von einem Benutzerkonto erhebt.

Vorzugsweise weist der Behälter 10 Mittel auf, um das im Innenraum befindliche Vermessungsgerät bzw. dessen Zubehör zu erkennen. Diese Mittel können beispielsweise RFID-Lesegeräte sein oder umfassen. Vorteilhaft kann so auch vollautomatisch eine Vollständigkeitsprüfung erfolgen. So kann z. B. vor einem Vermessungsauftrag mit diesem abgeglichen werden, ob alle benötigten Teile dabei sind, oder nach Beendigung des Auftrags, ob alle Teile wieder im richtigen Behälter verstaut wurden. Ausserdem kann bei einer Auslieferung ab Werk eine finale berührungslose Prüfung stattfinden, on der Lieferumfang korrekt ist.

Die zentrale Erfassung des Inventars und dessen Aufenthaltsort und Zustand, ist ein wichtiger Nutzen vor allem für das Flottenmanagement von Rental-Firmen und grösseren Dienstleistern oder Baufirmen. Des weiteren können diese Informationen für eine vereinfachte Abrechnung verwenden werden ("pay per use").

Vorzugsweise sind auf der Aussenhülle des Schutzbehälters 10 Mittel zur Anzeige von Informationen angebracht (hier nicht dargestellt). Diese können beispielsweise einen Touchscreen oder ein stromsparendes E-Papier-Display aufweisen. Die darauf angezeigten Informationen können insbesondere den Inhalt des Behälters oder Zustandsparameter oder Konfigurationen der beinhalteten Geräte oder Zubehöre betreffen. Ausserdem können ein Ladezustand einer Batterie des Behälters und/oder des Vermessungsgerätes oder weitere Informationen über Mieter und Besitzer, Auftrags-ID, Rückgabetermin oder ähnliches anzeigbar sein.

Ebenso kann vorzugsweise eine Mensch-Maschine-Schnittstelle vorgesehen sein, die beispielsweise als Touchscreen ausgestaltet sein kann. Diese Schnittstelle kann sowohl auf der Aussenhülle, wie auch im Innenraum angebracht sein.

Diagnostische Informationen - z. B. von Umweltsensoren erfasste Daten oder Informationen über eine Betriebsdauer des Vermessungsgerätes - können an einen zentralen Server versand werden und so einer zentral optimierten Wartungs- und Instandhaltungsplanung Vorschub leisten. Auch Ferndiagnose bzw. -wartung des Vermessungsgerätes sind möglich.

Optional können mehrere Behälter 10 miteinander kommunizieren. Ein solches System von Schutzbehältern kann beispielsweise dazu dienen, vor Fahrtantritt automatisch zu prüfen, ob alle für einen Vermessungsauftrag nötigen Geräte an Bord sind, oder nach Beendigung des Vermessungsauftrags, ob alle verwendeten Geräte wieder verladen sind, ohne die Behälter öffnen zu müssen. Beispielsweise kann dazu einer der Behälter als Master dienen, dessen Kommunikationseinheit eine Liste der zu transportierenden Teile - z. B. über das Funknetz - zur Verfügung gestellt wird, und die diese Liste dann mit den einzelnen Vollständigkeits- und Identitätsprüfungen der Behälter abgleicht und das Ergebnis - z. B. erneut über das Funknetz - einem Benutzer mitteilt.

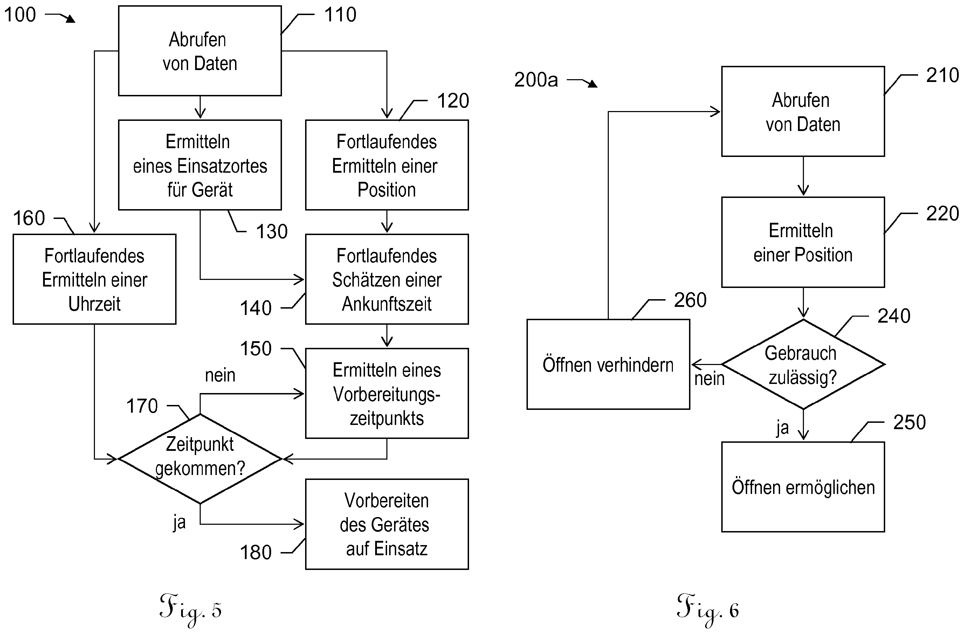

Figur 5 zeigt ein Flussdiagramm zur Illustration einer beispielhaften Ausführungsform eines Verfahrens 100 zum Vorbereiten eines Vermessungsgerätes während eines Transports des Vermessungsgerätes 40 in einem Innenraum 12 eines Behälters 10 auf einen Einsatz an einem bekannten Einsatzort.

Gemäss dem dargestellten Verfahren 100 werden Daten über ein Funknetz abgerufen 110, die unter anderem eine Groblokalisierbarkeit des Vermessungsgerätes bzw. des Behälters bereitstellen (Lokalisierungsdaten). Alternativ können diese Daten auch über ein GNSS-Empfangsmodul empfangbar sein. Basierend auf den abgerufenen Daten wird fortlaufend eine zumindest grobe Position ermittelt 120. Ausserdem wird ein Einsatzort des Vermessungsgerätes ermittelt 130 - beispielsweise ebenfalls aus den abgerufenen Daten oder durch eine Benutzereingabe. Basierend auf der ermittelten Position und dem bekannten Einsatzort wird dann die Restzeit bis zu einer Ankunft am Einsatzort geschätzt 140. In Abhängigkeit von einer bekannten benötigten Vorbereitungszeit wird ein Zeitpunkt ermittelt 150, zu dem mit dem Vorbereiten des Gerätes begonnen werden soll. Gleichzeitig kann fortlaufend (z. B. aus den abgerufenen Daten) eine aktuelle Uhrzeit ermittelt werden 160. Wenn erkannt wird 170, dass der Zeitpunkt zum Vorbereiten des Gerätes gekommen ist, wird das Vermessungsgerät, insbesondere vollautomatisch, auf seinen Einsatz vorbereitet 180. Wie bereits weiter oben beschrieben, kann dazu beispielsweise das Vermessungsgerät eingeschaltet werden, und einsatz- oder einsatzortbezogene Daten an das Vermessungsgerät übermittelt werden. Alternativ oder zusätzlich kann das Vorbereiten ein Aufladen eines Akkus des Vermessungsgerätes oder ein Annähern oder Angleichen der Temperatur im Innenraum des Behälters einer bekannten optimalen Betriebstemperatur des Vermessungsgerätes beinhalten.

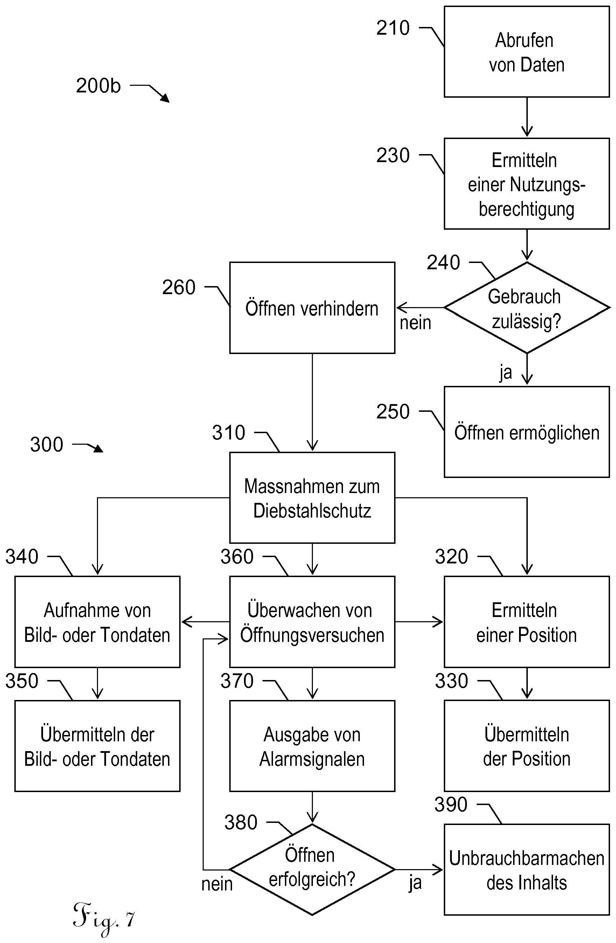

Die Figuren 6 und 7 zeigen jeweils ein Flussdiagramm zur Illustration zweier Ausführungsformen eines Verfahrens 200 zum Verhindern einer unberechtigten Entnahme eines Vermessungsgerätes aus einem Behälter.

In Figur 6 wird eine erste Ausführungsform 200a illustriert. Gemäss dieser Ausführungsform des Verfahrens werden Daten über ein Funknetz abgerufen 210, die unter anderem eine Groblokalisierbarkeit des Vermessungsgerätes bzw. des Behälters bereitstellen. Basierend auf den abgerufenen Daten wird fortlaufend eine zumindest grobe Position ermittelt 220. Wie bereits weiter oben beschrieben, wird anschliessend basierend auf den Daten ermittelt 240, ob eine Nutzungsberechtigung für das im Behälter befindliche Vermessungsgerät am gegenwärtigen Ort vorliegt, also ob der Gebrauch zulässig ist.

Ist dies der Fall, wird dem Benutzer das Öffnen des Behälters und damit die Entnahme des Vermessungsgerätes ermöglicht 250. Ist dies nicht der Fall, wird das Öffnen hingegen verhindert 260.

In Figur 7 wird eine zweite Ausführungsform 200b illustriert. Diese weist zusätzlich zur ersten Ausführungsform eine Diebstahlschutzfunktionalität 300 auf. Gemäss dieser Ausführungsform des Verfahrens werden Daten über ein Funknetz abgerufen 210. Basierend auf diesen Daten kann ermittelt werden 230, ob aktuell eine Nutzungsberechtigung für das Vermessungsgerät vorliegt, also beispielsweise ob das Gerät legal verwendet wird oder als gestohlen gemeldet wurde. Basierend auf den Daten wird ermittelt 240, ob eine Nutzungsberechtigung für das im Behälter befindliche Vermessungsgerät zum gegenwärtigen Zeitpunkt vorliegt, also ob der Gebrauch zulässig ist. Ist dies der Fall, wird dem Benutzer das Öffnen des Behälters und damit die Entnahme des Vermessungsgerätes ermöglicht 250.

Ist dies nicht der Fall, wird das Öffnen hingegen verhindert 260. Ausserdem werden im Rahmen der Diebstahlschutzfunktionalität 300 selbsttätig weitere Massnahmen 310 ergriffen. Diese Maßnahmen können beispielsweise das Ermitteln 320 einer Position und das Übermitteln dieser Position über das Funknetz an einen externen Server beihalten. Ausserdem kann eine Aufnahme 340 von Bild- und Tondaten zur Identifizierung der unrechtmässigen Besitzer und das Übermitteln dieser Bild- und Tondaten über das Funknetz an den externen Server erfolgen. Diese Maßnahmen können zum einen kontinuierlich erfolgen und sofort, nachdem ein Diebstahl erkannt wurde. Andererseits kann eine Überwachung 360 auf Öffnungsversuche erfolgen, die diese Massnahmen auslöst. Ein erkannter Öffnungsversuch kann ausserdem einen Alarm auslösen 370, wie schon weiter oben beschrieben. Insbesondere wenn erkannt wird 380, dass ein erfolgreicher Öffnungsversuch erfolgt ist, oder unmittelbar bevorsteht, können der Inhalt oder wesentliche Teile des Vermessungsgerätes auch zerstört bzw. unbrauchbar gemacht werden 390 - z. B. mechanisch, thermisch oder elektrisch. Alternativ kann beispielsweise mit einer auffälligen Farbe das Gerät als gestohlen gekennzeichnet werden. Auch kann ein von der Kommunikationseinheit Befehl an das Gerät übermittelt werden, in einen Diebstahl- oder Sperrmodus zu verfallen, in dem wesentliche Funktionen des Vermessungsgerätes ausser Betrieb sind. Um das Gerät wieder funktionsfähig zu machen, kann dann beispielsweise ein Entsperrcode nötig sein.

## Patentansprüche

1. Tragbarer Schutzbehälter (10) zum Transport eines elektrischen Vermessungsgerätes (40), mit
- einer äusseren Hülle (11) mit innerer Verschalung, die einen Innenraum (12) umschliesst, welcher zur Aufnahme des Vermessungsgerätes (40) ausgestaltet ist, wobei der Innenraum (12) mindestens eine Halterung aufweist und wobei die mindestens eine Halterung speziell zur Aufnahme eines bestimmten Vermessungsgeräte-Typs mit bekannten Ausmassen ausgestaltet ist,
- einem Griff, der dazu ausgestaltet ist, ein Tragen des Schutzbehälters (10) durch einen Benutzer zu ermöglichen,
- einem Schliessmechanismus (13), der dazu ausgestaltet ist, ein Öffnen des Schutzbehälters (10) durch einen Benutzer zu ermöglichen,
- einer in den Schutzbehälter (10), insbesondere in die Hülle oder die Verschalung, integrierten Kommunikationseinheit (20),
- einer mindestens einen Akkumulator (21) aufweisenden Versorgungseinheit zur Stromversorgung der Kommunikationseinheit (20), und
- Überprüfungsmitteln zum Überprüfen eines Vorhandenseins und einer Identität eines Vermessungsgerätes (40) im Innenraum (12),
wobei die Kommunikationseinheit (20) dazu ausgestaltet ist,
- Daten über Vorhandensein und Identität des Vermessungsgerätes (40) abzurufen,
- Daten über ein externes Funknetz abzurufen und zu versenden, insbesondere über ein terrestrisches oder satellitengestütztes Mobilfunknetz oder ein lokales Netzwerk, und
- Lokalisierungsdaten zu empfangen, die eine zumindest grobe Position des Schutzbehälters (10) bereitstellen,
wobei die Kommunikationseinheit dazu ausgestaltet ist, Daten mit dem Vermessungsgerät auszutauschen,
**dadurch gekennzeichnet, dass**
die Kommunikationseinheit (20) dazu ausgestaltet ist,
- über das Funknetz Daten abzurufen, aus denen ein bekannter Einsatzort des Vermessungsgerätes (40) ermittelbar ist,
- basierend auf der ermittelten Position des Schutzbehälters (10) und dem bekannten Einsatzort des Vermessungsgerätes (40) eine Restzeit bis zu einer Ankunft des Schutzbehälters (10) am Einsatzort zu ermitteln,
und
- basierend auf der ermittelten Restzeit selbsttätig
- das Vermessungsgerät (40) einzuschalten und/oder
- einsatzbezogene oder einsatzortbezogene Daten an das Vermessungsgerät (40) zu übermitteln.

2. Schutzbehälter (10) nach einem der vorangehenden Ansprüche,
**dadurch gekennzeichnet, dass**
die Kommunikationseinheit (20) dazu ausgestaltet ist,
- über das Funknetz abgerufene Daten an das Vermessungsgerät (40) weiterzuleiten und/oder von dem Vermessungsgerät (40) empfangene Daten über das Funknetz zu versenden; und/oder
- eine Verbindung mit dem Internet (30) herzustellen, und Daten über das Internet abzurufen und zu versenden.

3. Schutzbehälter (10) nach einem der vorangehenden Ansprüche,
**dadurch gekennzeichnet, dass**
- die Kommunikationseinheit (20) dazu ausgestaltet ist, die Lokalisierungsdaten über das Funknetz abzurufen;
- die Position des Schutzbehälters (10) auf mindestens dreihundert Meter genau ermittelbar ist, insbesondere auf mindestens dreissig Meter genau; und
- die Kommunikationseinheit (20) dazu ausgestaltet ist, basierend auf einer Vielzahl von abgeleiteten Positionen des Schutzbehälters (10) ein Bewegungsprofil zu erstellen.

4. Schutzbehälter (10) nach einem der vorangehenden Ansprüche,
**dadurch gekennzeichnet, dass**
das Vermessungsgerät (40) eine optimale Betriebstemperatur aufweist, wobei
- der Schutzbehälter (10) zur Regelung einer Temperatur des Innenraumes (12) und/oder des Vermessungsgerätes (40) eine Temperaturregelungseinheit (18) aufweist mit einer Temperaturerfassungseinheit und einer Heiz- und/oder Kühlfunktion, und
- die Kommunikationseinheit (20) dazu ausgestaltet ist, basierend auf einer ermittelten Restzeit einen Befehl an die Temperaturregelungseinheit (18) zu geben, die Temperatur des Innenraumes (12) bzw. des Vermessungsgerätes (40) der optimalen Betriebstemperatur anzunähern oder anzugleichen.

5. Schutzbehälter (10) nach einem der vorangehenden Ansprüche,
**dadurch gekennzeichnet, dass**
die Kommunikationseinheit (20) dazu ausgestaltet ist, basierend auf einer ermittelten Position des Schutzbehälters (10) einen Befehl an den Schliessmechanismus (13) zu senden, und der Schliessmechanismus (13) dazu ausgestaltet ist, in Abhängigkeit von dem von der Kommunikationseinheit (20) erhaltenen Befehl,
- ein Öffnen des Schliessmechanismus (13) des Schutzbehälters (10) durch einen Benutzer zu verhindern, insbesondere bis zu einer Freischaltung des Schliessmechanismus (13) mittels eines Codes,
- ein Öffnen des Schliessmechanismus (13) des Schutzbehälters (10) durch einen Benutzer zu ermöglichen, oder
- den Schutzbehälter (10) selbsttätig zu öffnen.

6. Schutzbehälter (10) nach einem der vorangehenden Ansprüche,
**dadurch gekennzeichnet, dass**
die Kommunikationseinheit (20) dazu ausgestaltet ist, basierend auf einer ermittelten Position des Schutzbehälters (10) einen Befehl an ein im Innenraum (12) befindliches Vermessungsgerät (40) zu senden, einen Sperrmodus zu aktivieren oder zu deaktivieren, in welchem wesentliche Funktionen des Vermessungsgerätes (40) nicht zur Verfügung stehen, insbesondere bis zu einer Freischaltung des Vermessungsgerätes (40) mittels eines Codes.

7. Schutzbehälter (10) nach einem der vorangehenden Ansprüche,
**dadurch gekennzeichnet, dass**
- durch die Kommunikationseinheit (20) Daten abrufbar sind, aus denen ein Vorliegen oder Nichtvorliegen einer Nutzungsberechtigung des Vermessungsgerätes (40) ermittelbar ist, und
- die Kommunikationseinheit (20) dazu ausgestaltet ist, basierend auf den Daten das Vorliegen oder Nichtvorliegen einer Nutzungsberechtigung des Vermessungsgerätes (40) zu ermitteln,
insbesondere wobei
- die Daten, aus denen das Vorliegen oder Nichtvorliegen der Nutzungsberechtigung des Vermessungsgerätes (40) ermittelbar ist, über das Internet (30) von einem externen Server (35) abrufbar sind, und/oder
- der Schutzbehälter (10) Mittel aufweist, die dazu ausgestaltet sind, einen Öffnungsversuch des Schliessmechanismus (13) zu erkennen und an die Kommunikationseinheit (20) zu melden.

8. Schutzbehälter (10) nach einem der vorangehenden Ansprüche,
**dadurch gekennzeichnet, dass**
der Schutzbehälter (10) eine automatisch ablaufende Diebstahlschutzfunktionalität (300) aufweist, im Rahmen derer die Kommunikationseinheit (20), insbesondere wenn ein Nichtvorliegen einer Nutzungsberechtigung Vermessungsgerätes (40) ermittelt wurde, dazu ausgestaltet ist,
- eine Position des Schutzbehälters (10) an einen externen Server (35) zu übermitteln;
- einen Befehl an den Schliessmechanismus (13) zu senden, und der Schliessmechanismus (13) dazu ausgestaltet ist, in Abhängigkeit von dem von der Kommunikationseinheit (20) erhaltenen Befehl ein Öffnen des Schliessmechanismus (13) des Schutzbehälters (10) durch einen Benutzer zu verhindern;
- einen Befehl an ein im Innenraum (12) befindliches Vermessungsgerät (40) zu senden, einen Sperrmodus zu aktivieren oder zu deaktivieren, in welchem wesentliche Funktionen des Vermessungsgerätes (40) nicht zur Verfügung stehen, insbesondere bis zu einer Freischaltung des Vermessungsgerätes (40) mittels eines Codes;
- einen Befehl an eine Alarmeinheit (19) des Schutzbehälters (10) zu senden, und die Alarmeinheit (19) dazu ausgestaltet ist, in Abhängigkeit von dem von der Kommunikationseinheit (20) erhaltenen Befehl ein optisches und/oder akustisches Warnsignal auszugeben;
- einen Befehl an eine Selbstzerstörungseinheit des Schutzbehälters (10) zu senden, und die Selbstzerstörungseinheit dazu ausgestaltet ist, in Abhängigkeit von dem von der Kommunikationseinheit (20) erhaltenen Befehl ein im Innenraum (12) befindliches Vermessungsgerät (40) unbrauchbar zu machen, und/oder
- einen Befehl an eine Markierungseinheit des Schutzbehälters (10) zu senden, und die Markierungseinheit dazu ausgestaltet ist, in Abhängigkeit von dem von der Kommunikationseinheit (20) erhaltenen Befehl ein im Innenraum (12) befindliches Vermessungsgerät (40) optisch zu markieren,
insbesondere wobei der Schutzbehälter (10) Mittel aufweist, die dazu ausgestaltet sind, ein gewaltsames Öffnen des Schutzbehälters (10) zu erkennen.

9. Schutzbehälter (10) nach einem der vorangehenden Ansprüche,
**gekennzeichnet durch**
- Mittel zum Generieren eines kabellosen Datennetzwerkes im Innenraum (12), und
- eine Anzeigeeinheit zum Anzeigen von Informationen über ein im Innenraum (12) befindliches Gerät auf der äusseren Hülle (11),
wobei die Kommunikationseinheit (20) dazu ausgestaltet ist, über das kabellose Datennetzwerk Daten mit dem im Innenraum (12) befindlichen Gerät auszutauschen und die Informationen über das Gerät der Anzeigeeinheit bereitzustellen, wobei die Informationen über das im Innenraum (12) befindliche Gerät mindestens umfassen:
- einen Ladezustand einer Batterie des Gerätes,
- eine Konfiguration des Gerätes, und/oder
- Informationen über einen Mietvertrag des Gerätes, insbesondere über einen Mieter, Besitzer und/oder Rückgabetermin.

10. Schutzbehälter (10) nach einem der vorangehenden Ansprüche,
**dadurch gekennzeichnet, dass**
die Überprüfungsmittel mindestens eine Kamera, einen Annäherungssensor, einen Barcodescanner oder ein RFID-Lesegerät aufweisen.

11. Schutzbehälter (10) nach einem der vorangehenden Ansprüche,
**dadurch gekennzeichnet, dass**
die Kommunikationseinheit (20) dazu ausgestaltet ist,
- eine Verbindung mit mindestens einem elektrischen Vermessungsgerät aufzunehmen, welches sich nicht im Innenraum (12) des Schutzbehälters (10) befindet;
- eine Verbindung mit einer Kommunikationseinheit mindestens eines weiteren Schutzbehälters aufzunehmen; und/oder
- eine Verbindung mit einem den Schutzbehälter (10) aufnehmenden Transportmittel, insbesondere Fahrzeug, herzustellen.

12. Schutzbehälter (10) nach einem der vorangehenden Ansprüche,
**dadurch gekennzeichnet, dass**
die Versorgungseinheit zusätzlich zur Stromversorgung des Gerätes im Innenraum (12) mittels eines Kabels,
mittels elektrischer Kontakte oder mittels Induktion ausgestaltet ist, und
- einen Strom-Generator,
- eine Brennstoffzelle,
- Solarzellen oder
- Mittel für eine externe Stromversorgung, insbesondere einen Anschluss für ein Stromkabel, Induktionsspulen oder elektrische Kontakte,
aufweist.

13. Schutzbehälter (10) nach einem der vorangehenden Ansprüche,
**dadurch gekennzeichnet, dass**
- der Innenraum mit einem Trägermaterial, insbesondere einem Schaumstoff oder einer mittels Blasformen hergestellter Kunststoffform, verfüllt ist, und die mindestens eine Halterung eine Aussparung (15-17) in dem Trägermaterial mit einer dem Gerät entsprechenden Form ist;
- die mindestens eine Halterung zur Aufnahme von Bauteilen (41-42) eines zerlegten Gerätes ausgestaltet ist; und/oder
- die mindestens eine Halterung zur Aufnahme eines Ersatzteiles oder Zubehörteiles (43) des Gerätes ausgestaltet ist.

14. Verfahren (100) zum Vorbereiten (180) eines Vermessungsgerätes (40) während eines Transports des Vermessungsgerätes (40) in einem Innenraum (12) eines tragbaren Schutzbehälters (10), insbesondere nach einem der Ansprüche 1 bis 13, auf einen Einsatz an einem bekannten Einsatzort, mit
- einem Abrufen (110) von Lokalisierungsdaten, die eine zumindest grobe Lokalisierbarkeit bereitstellen, durch eine Kommunikationseinheit (20) des Schutzbehälters (10),
- einem Ermitteln (120), basierend auf den Lokalisierungsdaten, einer zumindest groben Position des Vermessungsgerätes (40) durch die Kommunikationseinheit (20), und
- einem Ermitteln, basierend auf der ermittelten Position und dem bekannten Einsatzort, einer Restzeit bis zu einer Ankunft am Einsatzort durch die Kommunikationseinheit (20),
wobei basierend auf der ermittelten Restzeit das Vermessungsgerät (40) automatisch eingeschaltet wird, und/oder durch die Kommunikationseinheit (20) einsatzortbezogene Daten an das Vermessungsgerät (40) übermittelt werden.

15. Verfahren (100) nach Anspruch 14,
**dadurch gekennzeichnet, dass**
basierend auf der ermittelten Restzeit
- durch eine Versorgungseinheit des Vermessungsgerätes mittels eines Kabels, mittels elektrischer Kontakte oder mittels Induktion ein Akku des Vermessungsgerätes (40) geladen wird; und/oder
- durch eine Temperaturregelungseinheit (18) des Vermessungsgerätes eine Temperatur des Innenraumes (12) und/oder des Vermessungsgerätes (40) einer optimalen Betriebstemperatur des Vermessungsgerätes (40) angenähert oder angeglichen wird.

## Claims

1. Portable protective case (10) for transporting an electrical measuring device (40), having
- an outer shell (11) with internal cladding which encloses an interior space (12), which is designed to accommodate the measuring device (40), wherein the interior space (12) has at least one mounting and wherein the at least one mounting is specially designed to accommodate a specific type of measuring device with known dimensions,
- a handle, which is designed to enable the protective case (10) to be carried by a user,
- a locking mechanism (13), which is designed to enable the protective case (10) to be opened by a user,
- a communication unit (20) integrated into the protective case (10), in particular in the shell or cladding,
- a power supply unit having at least one accumulator (21) for supplying power to the communication unit (20), and
- verification means for verifying a presence and an identity of a measuring device (40) in the interior space (12),
wherein the communication unit (20) is designed
- to retrieve data about the presence and identity of the measuring device (40),
- to retrieve and send data via an external wireless network, in particular via a terrestrial or satellite-based wireless network or a local area network, and
- to receive localization data that provide at least a rough position of the protective case (10),
wherein the communication unit is designed to exchange data with the measuring device,
**characterized in that**
the communication unit (20) is designed to
- retrieve data via the wireless network, from which data a known usage location of the measuring device (40) can be determined,
- calculate, based on the identified position of the protective case (10) and the known usage location of the measuring device (40), a time remaining until arrival of the protective case (10) at the usage location, and
- based on a calculated time remaining,
- to automatically switch on the measuring device (40) and/or
- to automatically transmit usage location-related data to the measuring device (40).

2. Protective case (10) according to any one of the preceding claims,
**characterized in that**
the communication unit (20) is designed
- to forward data retrieved via the wireless network to the measuring device (40) and/or to send data received by the measuring device (40) via the wireless network; and/or
- to set up a connection to the Internet (30) and to retrieve and send data over the Internet.

3. Protective case (10) according to any one of the preceding claims,
**characterized in that**
- the communication unit (20) is designed to retrieve the localization data via the wireless network;
- the position of the protective case (10) can be determined to an accuracy of at least three hundred meters, in particular to an accuracy of at least thirty meters; and
- the communication unit (20) is designed to create a movement profile, based on a plurality of derived positions of the protective case (10).

4. Protective case (10) according to any one of the preceding claims,
**characterized in that**
the measuring device (40) has an optimum operating temperature, wherein
- in order to regulate the temperature of the interior space (12) and/or the measuring device (40), the protective case (10) has a temperature regulating unit (18) with a temperature sensing unit and a heating and/or cooling function, and
- the communication unit (20) is designed to issue a command to the temperature regulating unit (18) based on a calculated time remaining, to cause the temperature of the interior space (12) and/or of the measuring device (40) to approach or match the optimal operating temperature.

5. The protective case (10) as claimed in any one of the preceding claims,
**characterized in that**
the communication unit (20) is designed to send a command to the locking mechanism (13) based on an identified position of the protective case (10), and the locking mechanism (13) is designed, depending on the command received by the communication unit (20),
- to prevent opening of the protective case (10) by a user, in particular until the locking mechanism (13) is unlocked by means of a code,
- to enable opening of the protective case (10) by a user, or
- to open the protective case (10) automatically.

6. Protective case (10) according to any one of the preceding claims,
**characterized in that**
the communication unit (20) is designed to send a command to a measuring device (40) located in the interior space (12) based on an identified position of the protective case (10), in order to activate or deactivate a locked mode in which essential functions of the measuring device (40) are not available, in particular until the measuring device (40) is enabled by means of a code.

7. Protective case (10) according to any one of the preceding claims,
**characterized in that**
- data can be retrieved by the communication unit (20), from which the existence or non-existence of a usage authorization for the measuring device (40) can be determined, and
- the communication unit (20) is designed to determine, based on the data, the existence or non-existence of a usage authorization of the measuring device (40),
in particular wherein
- the data, from which the existence or non-existence of the usage authorization can be determined, can be retrieved from an external server (35) over the internet (30), and/or
- the protective case (10) has means which are designed to detect an attempt to open the locking mechanism (13) and to report it to the communication unit (20).

8. Protective case (10) according to any one of the preceding claims,
**characterized by**
an automatically running anti-theft functionality (300), as part of which the communication unit (20), in particular if a non-existence of a usage authorization for measuring device (40) has been determined, is designed
- to transmit a position of the protective case (10) to an external server (35);
- to send a command to the locking mechanism (13), and the locking mechanism (13) is designed to prevent opening of the protective case (10) by a user in the intended manner, depending on the command received by the communication unit (20);
- to send a command to a measuring device (40) located in the interior space (12) in order to activate or deactivate a locked mode, in which essential functions of the measuring device (40) are not available, in particular until the measuring device (40) is enabled by means of a code;
- to send a command to an alarm unit (19) of the protective case (10), and the alarm unit (19) is designed to emit a visual and/or audible warning signal, depending on the command received by the communication unit (20);
- to send a command to a self-destruction unit of the protective case (10), and the self-destruction unit is designed to render a measuring device (40) located in the interior space (12) unusable, depending on the command received by the communication unit (20), and/or
- to send a command to a marking unit of the protective case (10), and the marking unit is designed to visually mark a measuring device (40) located in the interior space (12), depending on the command received by the communication unit (20),
in particular, wherein the protective case (10) has means which are designed to detect a violent opening of the protective case (10).

9. Protective case (10) according to any one of the preceding claims,
**characterized by**
- means for generating a wireless data network in the interior space (12), and
- a display unit for displaying information concerning a measuring device (40) located inside the interior space (12) on the outer shell (11),
wherein the communication unit (20) is designed to exchange data with the measuring device (40) via the wireless data network and to supply the information about the measuring device (40) located in the interior space (12) to the display unit, wherein the information about the device in the interior space (12) comprises at least:
- a state of charge of a battery of the device,
- a configuration of the device, and/or
- information about a rental agreement of the device, in particular a hirer, owner and/or return date.

10. Protective case (10) according to any one of the preceding claims,
**characterized in that**
the verification means comprise at least one camera, a proximity sensor, a barcode scanner or an RFID reader.

11. Protective case (10) according to any one of the preceding claims,
**characterized in that**
the communication unit (20) is designed
- to maintain a connection to at least one measuring device, which is not located in the interior space (12) of the protective case (10);
- to maintain a connection to a communication unit of at least one other protective case; and/or
- to establish a connection to a means of transport, in particular a vehicle, that accommodates the protective case (10).

12. Protective case (10) according to any one of the preceding claims,
**characterized in that**
the power supply unit is designed to additionally supply power to the measuring device (40) in the interior space (12) by means of a cable, by means of electrical contacts or by means of induction, and comprises
- a current generator,
- a fuel cell,
- solar cells or
- means for an external power supply, in particular a connector for a power cable, induction coils or electrical contacts.

13. Protective case (10) according to any one of the preceding claims,
**characterized in that**
- the interior is filled with a carrier material, in particular a foam or a plastic molding manufactured by blow molding, and the at least one mounting is a recess (15-17) in the carrier material with a shape corresponding to the measuring device (40);
- the at least one mounting is designed for accommodating components (41-42) of a disassembled measuring device; and/or
- the at least one mounting is designed for accommodating a spare part or accessory (43) of the measuring device (40).

14. Method (100) for preparing (180) a measuring device (40) during transportation of the measuring device (40) in an interior space (12) of a case, in particular a portable protective case (10) as claimed in any one of claims 1 to 13, for use at a known location, with
- a retrieval (110), by a communication unit (20) of the protective case (10), of localization data that provide at least a rough localizability,
- a calculation (120), by the communication unit (20) and based on the localization data, of at least a rough position of the measuring device (40), and
- a calculation, by the communication unit (20) and based on the identified position and the known usage location, of a time remaining until arrival at the usage location,
wherein, based on the calculated time remaining, the measuring device (40) is switched on, and/or usage location-related data is transmitted to the measuring device (40) by the communication unit (20).

15. Method (100) according to claim 14,
**characterized in that**
based on the calculated time remaining,
- a rechargeable battery of the measuring device (40) is charged by means of a cable, by means of electrical contacts or by means of induction; and/or
- a temperature of the interior space (12) and/or of the measuring device (40) is approximated or matched to an optimal operating temperature of the measuring device (40).

## Revendications

1. Récipient de protection portable (10) pour le transport d'un appareil d'arpentage électrique (40), doté
- d'une enveloppe extérieure (11) dotée d'une coque interne entourant un espace intérieur (12), laquelle est configurée pour loger l'appareil d'arpentage (40), dans lequel l'espace intérieur (12) comporte au moins un maintien et dans lequel l'au moins un maintien est configuré spécialement pour le logement d'un type déterminé d'appareil d'arpentage de dimensions connues,
- d'une poignée, laquelle est configurée pour permettre à un utilisateur de porter le récipient de protection (10),
- d'un mécanisme de fermeture, lequel est configuré pour permettre à un utilisateur d'ouvrir le récipient de protection (10),
- d'une unité de communication (20) intégrée dans le récipient de protection (10), en particulier dans l'enveloppe ou dans la coque,
- d'une unité d'alimentation comportant au moins un accumulateur (21) pour l'alimentation en courant de l'unité de communication (20), et
- de moyens de contrôle destinés à contrôler une présence et une identité d'un appareil d'arpentage (40) dans l'espace intérieur (12),
dans lequel l'unité de communication (20) est configurée pour
- rappeler des données concernant la présence et l'identité de l'appareil d'arpentage (40),
- rappeler et envoyer des données par le biais d'un réseau radio externe, en particulier par le biais d'un réseau mobile terrestre ou satellite ou d'un réseau local, et
- recevoir des données de localisation, fournissant une position au moins grossière du récipient de protection (10),
dans lequel l'unité de communication est configurée pour échanger des données avec l'appareil d'arpentage,
**caractérisé en ce que**
l'unité de communication (20) est configurée pour
- rappeler des données par le biais du réseau radio, à partir desquelles un site de travail de l'appareil d'arpentage (40) peut être déterminé,
- déterminer un temps restant jusqu'à une arrivée du récipient de protection (10) sur le site de travail en se basant sur la position déterminée du récipient de protection (10) et le site de travail de l'appareil d'arpentage (40), et
- en se basant sur le temps restant déterminé
- allumer d'elle-même l'appareil d'arpentage (40) et/ou
- transmettre d'elle-même à l'appareil d'arpentage (40) des données en rapport avec le travail ou le site de travail.

2. Récipient de protection (10) selon l'une des revendications précédentes,
**caractérisé en ce que**
l'unité de communication (20) est configurée pour
- transmettre à l'appareil d'arpentage (40) des données rappelées par le biais du réseau radio et/ou émettre par le biais du réseau radio des données reçues par l'appareil d'arpentage (40) ; et/ou
- établir une connexion à Internet (30), et rappeler et envoyer des données par le biais d'Internet.

3. Récipient de protection (10) selon l'une des revendications précédentes,
**caractérisé en ce que**
l'unité de communication (20) est configurée pour
- rappeler les données de localisation par le biais du réseau radio ;
- la position du récipient de protection (10) peut être déterminée à au moins trois cents mètres près, en particulier à au moins trente mètres près ; et
- l'unité de communication (20) est configurée pour générer un profil de mouvement en se basant sur une pluralité de positions dérivées du récipient de protection (10).

4. Récipient de protection (10) selon l'une des revendications précédentes,
**caractérisé en ce que**
l'appareil d'arpentage (40) comporte une température optimale de fonctionnement, dans lequel
- le récipient de protection (10) comporte une unité de régulation de température (18) pour réguler une température de l'espace intérieur (12) et/ou de l'appareil d'arpentage (40), dotée d'une unité de saisie de température et d'une fonction de chauffage et/ou de refroidissement, et
- l'unité de communication (20) est configurée pour, en se basant sur un temps restant déterminé, donner à l'unité de régulation de température (18) un ordre d'ajuster la température de l'espace intérieur (12) ou de l'appareil d'arpentage (40) ou de la faire converger vers la température optimale de fonctionnement.

5. Récipient de protection (10) selon l'une des revendications précédentes,
**caractérisé en ce que**
l'unité de communication (20) est configurée pour, en se basant sur une position déterminée du récipient de protection (10), envoyer un ordre au mécanisme de fermeture (13), et le mécanisme de fermeture (13) est configuré pour, en fonction de l'ordre obtenu de l'unité de communication (20),
- empêcher une ouverture par un utilisateur du mécanisme de fermeture (13) du récipient de protection (10), en particulier jusqu'à un déblocage du mécanisme de fermeture (13) au moyen d'un code,
- permettre une ouverture par un utilisateur du mécanisme de fermeture (13) du récipient de protection (10), ou
- ouvrir le récipient de protection (10) par lui-même.

6. Récipient de protection (10) selon l'une des revendications précédentes,
**caractérisé en ce que**
l'unité de communication (20) est configurée pour, en se basant sur une position déterminée du récipient de protection (10), envoyer à un récipient de protection (10) se trouvant dans l'espace intérieur (12) un ordre d'activer ou de désactiver un mode de verrouillage, où les fonctions essentielles de l'appareil d'arpentage (40) ne sont pas disponibles, en particulier jusqu'à un déblocage de l'appareil d'arpentage (40) au moyen d'un code.

7. Récipient de protection (10) selon l'une des revendications précédentes,
**caractérisé en ce que**
- des données peuvent être rappelées par l'unité de communication (20), à partir desquelles une existence ou une inexistence d'une habilitation à l'utilisation de l'appareil d'arpentage (40) peut être déterminée, et
- l'unité de communication (20) est configurée pour, en se basant sur les données, déterminer l'existence ou l'inexistence d'une habilitation à l'utilisation de l'appareil d'arpentage (40),
en particulier dans lequel
- les données à partir desquelles l'existence ou l'inexistence de l'habilitation à l'utilisation de l'appareil d'arpentage (40) peut être déterminée peuvent être rappelées par le biais d'Internet (30) depuis un serveur externe (35), et/ou
- le récipient de protection (10) comporte des moyens qui sont configurés pour reconnaître une tentative d'ouverture du mécanisme de fermeture (13) et notifier celle-ci à l'unité de communication (20).

8. Récipient de protection (10) selon l'une des revendications précédentes,
**caractérisé en ce que**
le récipient de protection (10) comporte une fonctionnalité automatique de protection antivol (300), dans le cadre de laquelle l'unité de communication (20), en particulier lorsqu'une inexistence d'une habilitation à l'utilisation de l'appareil d'arpentage (40) est déterminée, est configurée pour
- transmettre une position du récipient de protection (10) à un serveur externe (35) ;
- envoyer un ordre au mécanisme de fermeture (13), et le mécanisme de fermeture (13) est configuré pour, en fonction de l'ordre obtenu de l'unité de communication (20), empêcher une ouverture par un utilisateur du mécanisme de fermeture (13) du récipient de protection (10) ;
- envoyer à un appareil d'arpentage (40) se trouvant dans l'espace intérieur (12) un ordre d'activer ou de désactiver un mode de verrouillage, où les fonctions essentielles de l'appareil d'arpentage (40) ne sont pas disponibles, en particulier jusqu'à un déblocage de l'appareil d'arpentage (40) au moyen d'un code ;
- envoyer un ordre à une unité d'alarme (19) du récipient de protection (10), et l'unité d'alarme (19) est configurée pour, en fonction de l'ordre obtenu de l'unité de communication (20), émettre un signal d'avertissement optique et/ou acoustique ;
- envoyer un ordre à une unité d'autodestruction du récipient de protection (10), et l'unité d'autodestruction est configurée pour, en fonction de l'ordre obtenu de l'unité de communication (20), rendre inutilisable un appareil d'arpentage (40) se trouvant dans l'espace intérieur (12), et/ou
- envoyer un ordre à une unité de marquage du récipient de protection (10), et l'unité de marquage est configurée pour, en fonction de l'ordre obtenu de l'unité de communication (20), marquer optiquement un appareil d'arpentage (40) se trouvant dans l'espace intérieur (12),
en particulier dans lequel le récipient de protection (10) comporte des moyens configurés pour reconnaître une ouverture de force du récipient de protection (10).

9. Récipient de protection (10) selon l'une des revendications précédentes,
**caractérisé par**
- des moyens de générer un réseau de données sans fil dans l'espace intérieur (12), et
- une unité d'affichage destinée à afficher sur l'enveloppe extérieure (11) des informations sur un appareil se trouvant dans l'espace intérieur (12),
dans lequel l'unité de communication (20) est configurée pour échanger des données avec l'appareil se trouvant dans l'espace intérieur (12) par le biais du réseau de données sans fil et fournir les informations à l'unité d'affichage par le biais de l'appareil, dans lequel les informations sur l'appareil se trouvant dans l'espace intérieur (12) comprennent :
- un état de charge d'une batterie de l'appareil,
- une configuration de l'appareil, et/ou
- des informations sur un contrat de location de l'appareil, en particulier sur un locataire, un propriétaire et/ou une date de restitution.

10. Récipient de protection (10) selon l'une des revendications précédentes,
**caractérisé en ce que**
les moyens de contrôle comportent au moins une caméra, un détecteur de proximité, un lecteur de code-barres ou un lecteur RFID.

11. Récipient de protection (10) selon l'une des revendications précédentes,
**caractérisé en ce que**
l'unité de communication (20) est configurée pour
- entrer en contact avec au moins un appareil d'arpentage électrique ne se trouvant pas dans l'espace intérieur (12) du récipient de protection (10) ;
- entrer en contact avec une unité de communication d'au moins un récipient de protection supplémentaire ; et/ou
- établir une connexion avec un moyen de transport accueillant le récipient de protection (10), en particulier un véhicule.

12. Récipient de protection (10) selon l'une des revendications précédentes,
**caractérisé en ce que**
l'unité d'alimentation est en outre configurée pour alimenter en courant l'appareil dans l'espace intérieur au moyen d'un câble, au moyen de contacts électriques ou au moyen de l'induction, et comporte
- un générateur de courant,
- une pile à combustible,
- des cellules solaires ou
- des moyens d'alimentation externe en courant, en particulier un raccordement pour un câble électrique, des bobines d'induction ou des contacts électriques.

13. Récipient de protection (10) selon l'une des revendications précédentes,
**caractérisé en ce que**
- l'espace intérieur est rempli d'un matériau porteur, en particulier une mousse ou une forme en plastique fabriquée par soufflage, et l'au moins un maintien est un évidement (15-17) dans le matériau porteur doté d'une forme correspondant à l'appareil ;
- l'au moins un maintien est configuré pour loger des composants (41-42) d'un appareil démonté ; et/ou
- l'au moins un maintien est configuré pour loger une pièce de rechange ou un accessoire (43) de l'appareil.

14. Procédé (100) destiné à préparer (180) un appareil d'arpentage (40) pendant un transport de l'appareil d'arpentage (40) dans un espace intérieur (12) d'un récipient de protection portable (10), en particulier selon l'une des revendications 1 à 13, pour un déploiement sur un site de travail connu, avec
- un rappel (110) de données de localisation fournissant une localisabilité au moins grossière, par une unité de communication (20) du récipient de protection (10),
- une détermination (120), basée sur les données de localisation, d'une position au moins grossière de l'appareil d'arpentage (40) par l'unité de communication (20), et
- une détermination, basée sur la position déterminée et le site de travail connu, d'un temps restant jusqu'à une arrivée sur le site de travail par l'unité de communication (20),
dans lequel en se basant sur le temps restant déterminé l'appareil d'arpentage (40) est allumé automatiquement, et/ou des données se rapportant au site de travail sont transmises à l'appareil d'arpentage (40) par l'unité de communication (20).

15. Procédé (100) selon la revendication 14,
**caractérisé en ce que**
en se basant sur le temps restant déterminé
- un accumulateur de l'appareil d'arpentage (40) est chargé par une unité d'alimentation de l'appareil d'arpentage au moyen d'un câble, au moyen de contacts électriques ou au moyen de l'induction ; et/ou
- une température de l'espace intérieur (12) et/ou de l'appareil d'arpentage (40) est ajustée ou rapprochée d'une température optimale de fonctionnement par une unité de régulation de température (18) de l'appareil d'arpentage.
